(19) Europäisches Patentamt
European Patent Office
Office européen des brevets

(11) **EP 3 347 691 B1**

(12) **EUROPÄISCHE PATENTSCHRIFT**

(45) Veröffentlichungstag und Bekanntmachung des Hinweises auf die Patenterteilung:
**12.01.2022  Patentblatt 2022/02**

(21) Anmeldenummer: **16778192.1**

(22) Anmeldetag: **15.08.2016**

(51) Int Cl.:
*G01N 15/14* (2006.01)  *G01N 35/10* (2006.01)
*B01L 3/00* (2006.01)  *G01N 15/10* (2006.01)

(86) Internationale Anmeldenummer:
**PCT/DE2016/100362**

(87) Internationale Veröffentlichungsnummer:
**WO 2017/041782 (16.03.2017 Gazette 2017/11)**

(54) **ANORDNUNG FÜR DIE INDIVIDUALISIERTE PATIENTENBLUTANALYSE UND VERWENDUNG**

ARRANGEMENT FOR AN INDIVIDUALIZED PATIENT BLOOD ANALYSIS AND USE

DISPOSITIF POUR L'ANALYSE DE SANG INDIVIDUALISÉE D'UN PATIENT ET UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2015  DE 102015115342**
**11.09.2015  DE 102015115343**
**11.09.2015  DE 202015104827 U**

(43) Veröffentlichungstag der Anmeldung:
**18.07.2018  Patentblatt 2018/29**

(73) Patentinhaber:
• **Leibniz-Institut für Photonische Technologien e.V.**
**07745 Jena (DE)**
• **Universitätsklinikum Jena**
**07747 Jena (DE)**

(72) Erfinder:
• **HENKEL, Thomas**
**07751 Jena (DE)**
• **BAUER, Michael**
**07749 Jena (DE)**
• **NEUGEBAUER, Ute**
**07743 Jena (DE)**
• **POPP, Jürgen**
**07751 Jena (DE)**

(74) Vertreter: **Donath, Dirk**
**Patent- und Rechtsanwälte Bock Bieber Donath**
**Hans-Knöll-Strasse 1**
**07745 Jena (DE)**

(56) Entgegenhaltungen:
DE-A1-102012 016 318     DE-B3-102004 034 354
US-A1- 2007 153 268      US-A1- 2007 177 458
US-A1- 2009 194 705      US-A1- 2014 234 949

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Anordnung für die individualisierte Patientenblutanalyse, insbesondere für Sepsis-Untersuchungen.

Gemäß dem derzeitigen Stand der Technik werden dem zu untersuchenden Patienten bei der klinischen Diagnostik größere Mengen Blut entnommen, um das Blut anschließend den unterschiedlichsten Analysen zu unterziehen, wobei diese oft an verschiedenen Laborarbeitsplätzen oder gar in unterschiedlichen Labors durchgeführt werden.

Bei einem Verdacht auf Infektionskrankheiten werden dabei bspw. Blutbilder zur Erfassung der Zahl und Form der zellulären Blutbestandteile vorgenommen, Tests mit diversen spezifischen Biomarkern zur Qualifizierung und Quantifizierung verschiedener Infektionserreger durchgeführt (wobei meist jeder Biomarker in einem eigenen Test vermessen werden muss) und mikrobiologische Analysen durch Kultivierung und anschließender Charakterisierung der Erreger vorgenommen.

Der Nachteil dieser gängigen klinischen Untersuchungen besteht darin, dass mehrere einzelne Tests vorzunehmen sind, die mehrere Milliliter Patientenblut erfordern, die darüber hinaus häufig sehr zeitaufwändig sind, (mikro-biologische Testergebnisse stehen oft erst nach 2 oder mehr Tagen zur Verfügung) und die zumeist nicht alle relevanten Informationen liefern (bspw. werden derzeit keine Informationen zum Aktivierungszustand der Leukozyten erfasst).

Eine einfache Systemlösung an Hand von Biomarkern, welche die volle gewünschte Informationsbreite für den Arzt bereitstellt, konnte bisher auch noch nicht erstellt werden.

WO 2008052221 A2 offenbart die Verwendung kohärenter RAMAN-Verfahren für medizinische diagnostische und therapeutische Zwecke, bei der ein System und ein Verfahren bereitgestellt werden, um nichtinvasiv, *in-vivo* und in Echtzeit eine molekulare Erkennung und Quantifizierung von Molekülspezies in einer Probe oder einem Tier zu ermöglichen.

Dadurch wird eine nicht-invasive, quantitative Erkennung von Molekülspezies kontinuierlich und in Echtzeit ermöglicht, um bspw. den Verlauf einer Therapie zu verfolgen.

Die US 2014/234949 A1 offenbart ein System für die individuelle in vitro- Patientenblutanalyse umfassend eine Detektionseinheit mit einer Kamera, welche holographische Bilder erfasst, ein RAMAN-Konfukal-Laser-Spektroskop und einen Fluoressenz-Assay, wobei diese Module mit einer Probensammel-Einheit und der Rest des Systems in fluidischer Verbindung stehen und die Module mit ein Controller sowie einer Datenbank verbunden sind.

Gemäß der Offenbarung von US 2014/234949 A1 erfolgt die Handhabung dieses Systems vermittels von Komponenten in einer Probenbearbeitungsvorrichtung mit einer Fluidhandhabungsvorrichtung, wobei folgende Handhabung vorgesehen ist:

- Eingreifen einer Pipettenspitze in eine erste Düse der Fluidhandhabungsvorrichtung, wobei die Fluidhandhabungsvorrichtung mindestens diese erste Düse und eine zweite Düse aufweist;

- Auskuppeln der Pipettenspitze von der ersten Düse, wobei gleichzeitig eine erste Aufnahmeschnittstelle einer Küvette mit der ersten Düse und eine zweite Aufnahmeschnittstelle der Küvette mit der zweiten Düse eingreift, wobei die Küvette

  • die erste Aufnahmeschnittstelle und die zweite Aufnahmeschnittstelle umfasst und jede Schnittstelle so konfiguriert ist, dass sie in eine Düse der Fluidhandhabungsvorrichtung eingreift, und

  • mindestens einen ersten Hohlraum und einen zweiten Hohlraum aufweist, wobei jeder Hohlraum so konfiguriert ist, dass er ein Fluid aufnimmt; und
  und

- abschließendes Lösen der Küvette von der ersten und der zweiten Düse. Hierzu offenbart US 2014/234949 A1 eine Anordnung für die individualisierte in-vitro- Patientenblutanalyse umfassend ein Holographie-Modul, ein Raman-Spektroskopie-Modul, ein Biomarker-Modul und einen integrierten Flusssteuerbaustein, welche daten- und informationsleitend mit einer zentralen Steuer- und Computereinheit in Verbindung stehen, die informationsleitend mit einer Datenbank verbunden ist, wobei

  • das Holographie-Modul aus einer Holographie-Probenvorbereitungs-Kartusche und einer Holographie-Probenmess-Einheit besteht, die mikrofluidisch miteinander verbunden sind,

  • das Raman-Spektroskopie-Modul aus einer Raman-Spektroskopie-Probenvorbereitungs-Kartusche und einer Raman-Spektroskopie-Probenmess-Einheit besteht, die mikrofluidisch miteinander verbunden sind,

  • das Biomarker-Modul aus einer Biomarker-Probenvorbereitungs-Kartusche und einer Biomarker-Probenmess-Einheit besteht, die mikrofluidisch miteinander verbunden sind, und die Module über den Flusssteuerbaustein mit einer gemeinsamen Blutprobenzuführung und weiteren Flüssigkeitsmaterialzuführungen fluidisch verbunden sind, wobei

  • die Biomarker-Probenvorbereitungs-Kartusche aus mikro-strukturierten mikro-fluidischen Dielektrophoresekanälen mit Mikroelektroden oder Mikrokanälen mit mechanischen Filtern oder Querschnittsänderungen besteht, die mit dem Flusssteuerbaustein mikrofluidisch verbunden sind und die Biomarker-Probenmesseinheit eine Photosensor-Detektorarray- Anordnung mit kohärenter Beleuchtungsquelle ist, wobei

- die Module, die Blutprobenzuführung und die Flüssigkeitsmaterialzuführungen über den Flusssteuerbaustein fluidisch integriert kombiniert sind.

Die DE 10 2012 016 318 A1 offenbart eine Anordnung für ein linsenloses Inline Auflicht-Mikroskop, bei dem in zueinander im Wesentlichen planparalleler Anordnung ein Probenträger mit Probe, darüber in einem ersten Abstand zur Probe ein planparalleler teildurchlässiger Spiegel und zu dessen teilreflektiver Fläche in einem weiteren Abstand entfernt ein digitales, Detektor-Array [CCD, CMOS] vorgesehen sind, wobei in der effektiven Fläche des Detektor-Arrays eine punktförmige Beleuchtungsquelle zur Aussendung kohärenter Strahlung vorgesehen ist und das Verhältnis zwischen der Kantenlänge der effektiven Fläche des Detektor-Arrays zum Abstand dieser zum Probenträger in einem Bereich von 3/2 bis 4/1 gewählt ist.

Die DE 10 2004 034 354 A1 offenbart ein ultrakompaktes Raman-Spektrometer, das für Untersuchungen von chemischen Strukturen etc. oder auch für die quasi-simultane Identifizierung vieler Biopartikel auf Substraten zur Anwendung gelangen soll. Ein solches Spektrometer, das als echtes handheld-Gerät Anwendung finden kann, wird dadurch realisiert, dass der Ort der zu untersuchenden Probe unmittelbar in der Abbildungsebene der optischen Spektraleinheit positioniert ist, wobei die optische Anregung der zu untersuchenden Probe vermittels fokussierter Strahlung des Lasers genau in der Ebene der virtuellen Spaltposition der abbildenden Spektraleinheit erfolgt und im Strahlengang zwischen Probe und Spektraleinheit ausschließlich ein Raman-Strahlung durchlassender Filter angeordnet ist.

Die US 2007/177 458 A offenbart ein Verfahren zum Mischen von Fluidströmen, mikrofluidischem Mischer und mikrofluidischem Chip sowie die Verwendung dieser für ein topologisches Mischschema, das die Laminarität der Strömung ausnutzt, um die Strömung wiederholt zu falten und die Konzentrationsgradienten exponentiell zu erhöhen, um ein schnelles und effizientes Mischen durch Diffusion zu erhalten. Diese technische Lösung basiert auf schraubenförmigen Strömungskanälen mit entgegengesetzten Chiralitäten, die sich drehen und den Fluidstrom in einer Topologie rekombinieren. Diese Geometrie wird in einer einfachen, zweistufigen, zweilagigen Elastomerstruktur mit einer Grundfläche von 400 μm x 300 μm pro Stufe realisiert, die zwei Lösungen effizient bei Reynolds-Zahlen zwischen 0,1 und 2 mischt.

Die US 2009/194 705 A1 offenbart, dass eine Anregungskomponente oder -anordnung die Anregung für ein sich bewegendes Objekt bereitstellen kann, so dass Information in zeitlicher Variation des von dem Objekt ausgehenden Lichts codiert wird. Die dabei erzeugten nichtbinären Spektren könnten unterschiedliche Zwischenintensitäten sein, wie verschiedene Graustufen oder unterschiedliche Intensitäten einer Farbe oder unterschiedliche Farben. Die Erregung kann in einem Muster mit nicht-störungsähnlichen Übergängen zwischen Regionen bereitgestellt werden, und die Objektbewegung kann auch gesteuert werden. Bei einem anderen Ansatz kann ein Triggersignal eine zeitvariable Erregung in einer Region mit nicht störungsfreien Übergängen zwischen Erregungsintervallen wie Schwarz / Weiß, Mehrfachfarben oder Graustufen verursachen.

Die US 2007/153268 A1 offenbart ein System und Methode zur Unterscheidung von normalen Zellen aus apoptotischen Zellen. Ein vorgegebener Vektorraum wird ausgewählt, wobei der Vektorraum mathematisch eine erste Vielzahl von Referenz-Raman-Datensätzen für normale Zellen und eine zweite Anzahl von Referenz-Raman-Datensätzen für apoptotische Zellen beschreibt. Eine Probe wird mit im wesentlichen monochromatischem Licht bestrahlt, das einen Ziel-Raman-Datensatz erzeugt, der auf gestreuten Photonen basiert. Der Ziel-Raman-Datensatz wird in einen Vektorraum transformiert, der durch den vorgegebenen Vektorraum definiert ist. Eine Verteilung von transformierten Daten wird im vorgegebenen Vektorraum analysiert. Basierend auf der Analyse wird die Probe als normale Zellen, apoptotische Zellen und eine Kombination von normalen und apoptotischen Zellen klassifiziert. Die Probe umfasst den Schritt des Behandelns der Probe mit einem pharmazeutischen Mittel vor dem Bestrahlen der Probe. Basierend auf der Klassifizierung wird die therapeutische Effizienz des Arzneimittels beurteilt.

Alle zuvor stehenden technischen Lösungen haben den Nachteil, dass keine multimodale und sehr schnelle Blutanalyse möglich ist und nicht an Hand einer Blutmenge von nur 1 bis 2 ml in weniger als 1 Stunde ein aussagekräftiges Untersuchungsergebnis gewonnen werden kann.

Die Aufgabe der vorliegenden Erfindung besteht darin, eine Anordnung für die individualisierte in-vitro- Patientenblutanalyse, insbesondere für Sepsis-Untersuchungen anzugeben, welche eine multimodale und sehr schnelle Blutanalyse ermöglicht und an Hand einer Blutmenge von nur 1 bis 2 ml in weniger als 1 Stunde ein aussagekräftiges Untersuchungsergebnis ermöglicht.

Erfindungsgemäß wird diese Aufgabe durch die Merkmale des 1. Patentanspruchs gelöst. Eine entsprechende Verwendung zur Bestimmung eines Sepsis-Scores ist in Anspruch 8 offenbart. Weitere günstige Ausgestaltungsmöglichkeiten der Erfindung sind in den nachgeordneten Patentansprüchen angegeben.

Das Wesen der Erfindung besteht darin, dass die Anordnung für die individualisierte Patientenblutanalyse, insbesondere für Sepsis-Untersuchungen, gleichzeitig ein Holographie-Modul, ein Raman-Spektroskopie-Modul und ein Biomarker-Modul umfasst, welche daten-und informationsleitend mit einer zentralen Steuer- und Computereinheit in Verbindung stehen, die informationsleitend mit einer Datenbank verbunden ist, wobei durch diese Anordnung eine multimodale und sehr schnelle Blutanalyse ermöglicht wird.

Die drei Module der Anordnung sind mikrofluidisch ausgeführt, bestehen dabei jeweils aus einer Probenvorbereitungs-Kartusche und einer Probenmesseinheit, wobei die Kartuschen über einen integrierten mikrofluidischen Flusssteuerbaustein, der ebenfalls daten- und informationsleitend mit einer zentralen Steuer- und Computereinheit verbunden ist, mit diversen Flüssigkeitszuführungen (darunter einer zentralen Blutproben-Zuführung) fluidisch verbunden sind.

Der integrierte mikrofluidische Flusssteuerbaustein ermöglicht es, dass die zu analysierende Probe an einer einzigen Ladeposition aufgegeben und danach automatisch für die einzelnen Probenvorbereitungs-Kartuschen und Probenmesseinheiten aufgeteilt wird.

Dieser modulare Aufbau der Anordnung bringt u.a. folgende Vorteile mit sich:

- Entkopplung der Module gegeneinander bezüglich optischer und elektrischer Störungen
- Optimal kurze Weg innerhalb der Module
- Einfacher Austausch durch weiterentwickelte Module
- Servicefreundlichkeit
- Kombination verschiedener Technologien mit integrierter Auswertung

Auf Grund des modularen, mikrofluidischen Aufbaus ist eine multimodale Analyse von kleinsten Mengen Patientenblut (nur etwa 1-2 ml) zur Stratifizierung von Patienten möglich (bspw. von Patienten mit und ohne Infektion sowie mit und ohne hyperinflammatorischer Immunantwort), wobei die Endergebnisse, welche die modular aufgebaute Anordnung liefert, gegenüber dem Stand der Technik wesentlich schneller vorliegen (weniger als 1h) und dem Arzt gleichzeitig tiefere Einblicke in das Krankheitsbild und Differenzierungsmöglichkeiten liefern.

Die Erfindung wird nachstehend an Hand der schematischen Zeichnungen und dem Ausführungsbeispiel näher erläutert. Dabei zeigt:

Fig. 1: eine schematische Darstellung einer Ausführungsform der Anordnung für die individualisierte Patientenblutanalyse,

Fig. 2: eine schematische Darstellung eines Ventilblocks eines Flusssteuerbausteins der Anordnung gemäß Fig. 1 mit zwei Schaltbeispielen,

Fig. 3: eine schematische Darstellung einer Ausführungsform der Vorrichtung zur Fluidrotation in einem Flusssteuerbaustein der Anordnung gemäß Fig. 1 zur dreidimensionalen hydrodynamischen Fokussierung,

Fig. 4: eine schematische Darstellung des Zweilangen-Chipsystems der Vorrichtung gemäß Fig. 3,

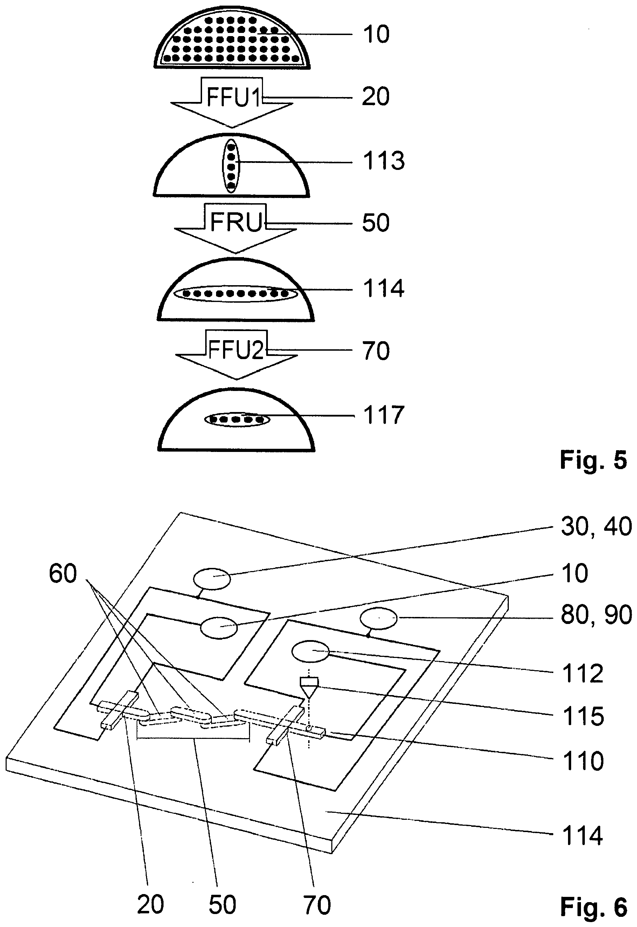

Fig. 5: eine schematische Darstellung der Querschnitte der Fluidkanale im Zweilangen-Chipsystem gemäß Fig. 4,

Fig. 6: eine schematische Darstellung einer Ausführungsform der Vorrichtung zur Fluidrotation als Bestandteil eines Flusssteuerbausteins zur dreidimensionalen hydrodynamischen,

Fig. 7: eine erste schematische Darstellung zur Veranschaulichung der Fluid-Rotation in einem Flusssteuerbaustein und

Fig. 8: eine schematische Darstellung zur Veranschaulichung der Fluid-Rotation in einem Flusssteuerbaustein.

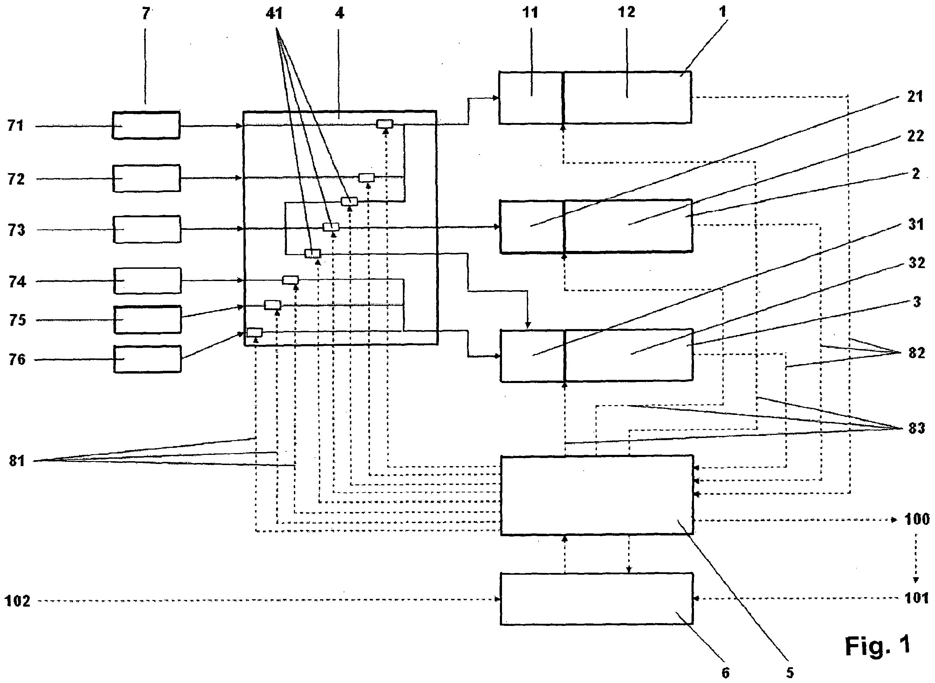

Die in der Fig. 1 dargestellte Anordnung für die individualisierte Patientenblutanalyse umfasst ein Holographie-Modul (1), ein Raman-Spektroskopie-Modul (2), ein Biomarker-Modul (3) und einen integrierten Flusssteuerbaustein (4), welche daten- und informationsleitend mit einer zentralen Steuer- und Computereinheit (5) in Verbindung stehen, die informationsleitend mit einer Datenbank (6) verbunden ist.

Das Holographie-Modul (1), das Raman-Spektroskopie-Modul (2) und das Biomarker-Modul (3) sind dabei über den Flusssteuerbaustein (4), welcher vorzugsweise aus einer Einheit oder mehreren fluidisch und regelungstechnisch gekoppelten Einheiten besteht, mit einer gemeinsamen Blutprobenzuführung (73) und weiteren Flüssigkeitsmaterialzuführungen (7) mikrofluidisch verbunden.

Diese weiteren Flüssigkeitsmaterialzuführungen (7) sind eine Farblösungs-Zuführung (71), eine Puffer-Zuführung (72), eine Blutproben-Zuführung (73), eine Biomarker 1-Zuführung (74), eine Biomarker 2-Zuführung (75), eine Biomarker 3-Zuführung (76) sowie Zuführungen für Service- und Reinigungsfluide (78).

Alle zuvor stehenden technischen Lösungen haben den Nachteil, dass keine multimodale und sehr schnelle Blutanalyse möglich ist und nicht an Hand einer Blutmenge von nur 1 bis 2 ml in weniger als 1 Stunde ein aussagekräftiges Untersuchungsergebnis gewonnen werden kann.

Die Aufgabe der vorliegenden Erfindung besteht darin, eine Anordnung für die individualisierte invitro- Patientenblutanalyse, insbesondere für Sepsis-Untersuchungen anzugeben, welche eine multimodale und sehr schnelle Blutanalyse ermöglicht und an Hand einer Blutmenge von nur 1 bis 2 ml in weniger als 1 Stunde ein aussagekräftiges Untersuchungsergebnis ermöglicht.

Erfindungsgemäß wird diese Aufgabe durch die Merkmale des 1. Patentanspruchs gelöst. Weitere günstige Ausgestaltungsmöglichkeiten der Erfindung sind in den nachgeordneten Patentansprüchen angegeben.

Es wird eine Anordnung für die individualisierte Patientenblutanalyse, insbesondere für Sepsis-Untersuchungen bereit gestellt, welche gleichzeitig ein Holographie-Modul, ein Raman-Spektroskopie-Modul und ein Biomarker-Modul umfasst, welche daten- und informationsleitend mit einer zentralen Steuer- und Computereinheit in Verbindung stehen, die informationsleitend mit einer Datenbank verbunden ist, wobei durch diese Anordnung eine multimodale und sehr schnelle Blutanalyse ermöglicht wird.

Die drei Module der Anordnung sind mikrofluidisch ausgeführt, bestehen dabei jeweils aus einer Probenvorbereitungs-Kartusche und einer Probenmesseinheit, wobei die Kartuschen über einen integrierten mikrofluidischen Flusssteuerbaustein, der ebenfalls daten- und informationsleitend mit einer zentralen Steuer- und Computereinheit verbunden ist, mit diversen Flüssigkeitszuführungen (darunter einer zentralen Blutproben-Zuführung) fluidisch verbunden sind.

Sinnvolle Überwachungsfunktionen, wie bspw. die Prüfung der Blasenfreiheit des geförderten Fluids sowie die Bewertung von Filtrationsprozessen und Färbeprozeduren in der Kartusche sind optional am Flusssteuerbaustein (4) vorgesehen (in der Figur 1 nicht dargestellt).

Für die Herstellung des Flusssteuerbaustein (4) sind bspw. kontaktfreie Imaging Verfahren vorgesehen, welche bei Verwendung optisch transparenter Materialien für die Grundplatte als berührungsfreie Sensorik und Überwachungseinheit für die Funktionskontrolle integriert werden können. Hierfür muss ein optisches Monitoring-System unterhalb der Chipkartusche im System integriert sein, so dass ein entsprechender Bauraum und die optische Zugänglichkeit für die bildgestütze Überwachung der Systemfunktion realisiert ist.

Das Elastomer-Chipsystem besteht aus einer steifen, optisch durchsichtigen/ transparenten Grundplatte (bspw. aus Glas oder Plaste), gegen welche ein Elastomer-Formteil flüssigkeitsdichtend angeordnet ist, welches die Reagenzvorlagen, Verbindungskanäle, Förderkanäle, Filterelemente, Ventilelemente des Ventilblockes und den Anschlussblock für die Fluidverbinder sowie optionale Filterelemente und Hilfsstrukturen für die effiziente Durchmischung von Fluiden umfasst. Die Größe des Chipsystems kann bspw. im "Scheck-/ Kreditkartenformat ausgestaltet sein.

Die Grundplatte ist eine Platte aus inelastischem, optisch transparentem Material, welche als Träger für das Elastomer-Formteil dient und mit diesem permanent durch Kleben / Bonden verbunden ist.

Materialien der Grundplatte können Glas, Silizium, Metalle, thermoplastische Polymere (Polycarbonat, COC, PVC, Polystyrol), duroplastische Polymere (z. B. Elektronik Leiterplatten) oder keramische Träger (LTCC und Keramikplatten) sein.

Das Elastomer-Formteil wird bspw. mittels Replikationstechniken (Spritzguss, Abformung eines Masters aus PDMS, Silikongummi oder Sillikon-Werkstoffen = Elastomermaterialien mit Shore-Härten im Bereich zwischen 10 und 120) hergestellt.

Das Fügen des Elastomer-Formteils auf die Grundplatte erfolgt mit Klebe- oder Bondverfahren. Bei Verwendung eines Elastomer-Formteils aus PDMS und einer Grundplatte aus Glas empfiehlt sich das selbsttätige Verbonden der Formteile nach Aktivierung der Oberflächen mittels Sauerstoff-Plasma.

Die Förderkanäle werden als vorzugsweise halbrunde lineare Kanäle ausgeführt, welche unter Nutzung des Wirkprinzips von linearen Peristaltikpumpen aktuiert werden. Hierfür wird ein Stempel auf die Oberseite des Chips über dem zu aktuierenden Förderkanal so aufgepresst, dass dieser an der Aufpressstelle vollständig abgequetscht wird. Beim Bewegen des Stempels entlang der Kanalrichtung folgt das Fluid dem Stempel und wird somit gefördert.

Die Flussrate Q ergibt sich aus Vorschubgeschwindigkeit des Stempels u und dem Querschnitt des Förderkanals A zu $Q = A * u$. Der Förderkanal ist einseitig mit einem Fluidreservoir verbunden und mündet auf der gegenüberliegenden Seite in den Ventilblock ein. Die Kanaldimensionen liegen dabei im Bereich zwischen 0.3 und 6 mm (Breite) und 0.15-3 mm (Höhe).

Die Verbindungskanäle sind in dem Elastomer-Formteil integriert und weisen gegenüber den Förderkanälen geringere Kanalquerschnitte mit Kanalbreiten im Bereich zwischen 0.1 und 1.2 mm und Kanalhöhen im Bereich zwischen 0.05 und 0.8 mm auf.

Die Reagenzvorlage ist als in dem Elastomer-Teil integrierte, optional mit einem Septum ausgestattete Kavitäten ausgeführt. Die Volumina liegen dabei zwischen 5 $\mu$l bis hin zu 500 $\mu$l (z.B. für Service- und Reinigungsflüssigkeiten).

Der Ventilblock wird durch eine Anordnung von Quetschventilen realisiert. An jeder Ventilposition befindet sich ein Ventilstempel, welcher abgesenkt werden kann und dadurch den Elastomerkanal abquetscht und formschlüssig verschließt.

Die Anordnung ist dabei so ausgeführt, dass Fluide von beliebigen Einlässen in den Ventilblock zu beliebigen Auslässen des Ventilblockes geleitet werden können. Dabei können Einlässe bidirektional auch als Auslässe aus dem Ventilblock betrieben werden.

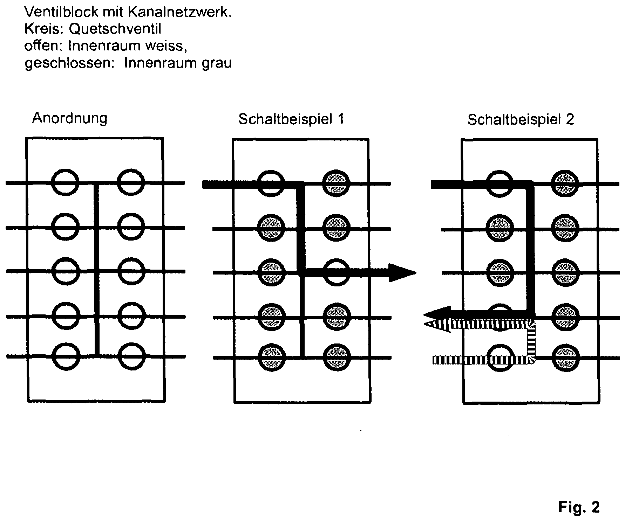

Das entsprechende beispielhafte Beschaltungsschema eines Ventilblocks ist in Fig. 2 dargestellt.

Auf diese Weise können Fluide aus Förderkanälen, wie in Fig. 2, Schaltbeispiel 1 dargestellt, zu beliebigen Auslässen geleitet werden - oder aber bei paralleler Förderung, wie in Fig. 2, Schaltbeispiel 2 dargestellt, aus mehreren Förderkanälen miteinander kombiniert und entweder in einen Förderkanal gesammelt oder aber als Mischung durch einen der chipseitigen Auslässe zu den Analysestationen gefördert werden.

Durch diese Einfachheit der Implementierung ergibt sich die Möglichkeit, Fluid-Förderung mit flexibel konfigurierbaren Probenvorbreitungsschritten zu kombinieren.

Der Anschlussblock besteht aus einer in der Chipkartusche integrierten Anordnung vertikaler Fluidauslässe, welche fluidisch mit dem Ventilblock verbunden sind. Die fluidische Kontaktierung erfolgt durch Aufbressen einer Anschlussplatte, enthaltend die Verbindungskapillaren und ein Dichtelement. Die Anschlussplatte kann automatisch auf die Anschlussposition abgesenkt oder angehoben werden und ermöglicht damit eine lösbare fluidische Anbindung des Flusssteuerbausteines 4 an die Systems und die Analysemodule (1,2 und 3).

Die Filterelemente sind als in Kanäle integrierte Säulenarrays oder durch Integration von Filtermembranen in die Verbindungskanäle oder durch Integration kommerziell erhältlicher Filterelementen in den Bauraum zwischen zwei Förder- oder Verbindungskanälen realisiert.

Des Weiteren sind Hilfsstrukturen für die effiziente Durchmischung von Fluiden vorgesehen. Dadurch ist in den Förderkanälen eine effiziente Durchmischung durch Pumpen des Fluids in die Fluidreservare und Rückpumpen in die Förderkanäle realisiert.

Darüber hinaus kann durch zeitlich periodisches Absenken des Stempels auf den Förderkanal eine Agitation des Fluids realisiert und für die Durchmischung genutzt werden.

Darüber hinaus können an sich bekannte, auf dem Multilaminationsprinzip basierende Mikromischer in die Kartusche integriert werden.

Bei einem Fluid-Management mit hohen Flussraten und Reynolds-zahlen können an sich bekannte, auf Prinzipien der Chaotic Advection basierende Mikromischer, wie bspw. T-Mischer oder Mäandermischer eingesetzt werden. Diese Systeme wirken oberhalb einer kritischen Reynoldszahl als Mischer (Re > 240 für T-Mischer und Re > 80 für Zickzack-Mischer) und können dann eingesetzt werden, wenn die Fluide mit hohen Transportgeschwindigkeiten und Reynolds Zahlen transportiert werden sollen.

Bei einem Fluid-Management mit niedrigen Flussraten und kleinen Reynoldszahlen (Re < 10) wird eine spezielle Fluid-Rotationseinheit im Flusssteuerbaustein (4) eingesetzt, welche aus zwei oder mehreren, hintereinander angeordneten, an ihren Enden miteinander verbunden Mikrokanalsegmenten besteht, wobei die beiden jeweils miteinander verbundenen Kanalsegmente in einem Winkel $\alpha$ zueinander angeordnet sind, sich die beiden jeweils miteinander verbunden Kanalsegmente in zwei übereinaderliegenden Ebenen befinden, die Enden der Kanalsegmenten geschlossen sind und der Übergang zum nächsten Kanalsegmenten seitlich an den Kanalsegmentenden erfolgt. Die hintereinander angeordneten Kanalsegmente sind dabei abwechselnd in die obere und untere Chiplage eingebracht.

In dieses Zweilangen-Chipsystem kann vor und /oder nach der Anordnung für die Fluidrotation auch noch eine hydrodynamische Fokussierungseinheit eingebracht sein.

Dadurch, dass die Kanalsegmente winklig zueinander angeordnet sind, wird das durchfließende Medium jeweils Richtungsänderungen unterzogen, die insgesamt eine Rotation des Mediums um die Achse in Strömungsrichtung bewirken, so dass diese Fluid-Rotationseinheit dann eingesetzt wird, wenn die Fluide mit geringen Transportgeschwindigkeiten und Reynolds Zahlen transportiert werden sollen.

Das Wesen der speziellen Fluid-Rotationseinheit besteht darin, dass winklig zueinander ausgerichtete Strömungskanalsegmente in Form von Mikrokanäle in einem Zweilangen-Chipsystem hintereinander angeordnet sind , wobei der Fluidstrom beim Durchfließen der Übergänge zwischen den Kanälen um die Flussachse um jeweils einen Winkel $\alpha$ gedreht wird, der von der Kanalgeometrie und vom Winkel $\beta$ zwischen den Kanalsegmenten abhängt, wobei dieser Winkel $\beta$ die Abweichung von einer geradlinigen bzw. parallelen Anordnung der verbunden Kanalsegmente angibt.

Für die Vielfalt der möglichen Kanalgeometrien, insbesondere der Form der Kanalquerschnitte, und der möglichen Ausformungen der Übergänge zwischen den Kanalsegmenten ist eine Berechnung des resultierenden Winkels der Fluidrotation mit einem CFD-Verfahren (computational fluid dynamics) möglich. Exemplarisch wird dies anhand eines halbrunden Kanalquerschnittes, eines halbkugelförmigen Kanalsegmentendes und eines deckungsgleichen Übergangs zwischen den Kanalsegmenten beschrieben.

Softwaresysteme für die Durchführung dieser Modellierungen sind sowohl als Bestandteil kommerzieller CAD Systeme (z.B. SolidWorks) als auch als separate Systeme von kommerziellen Anbietern (z.B. Ansys, Fluent, COMSOL) oder als Open Source Toolkits (z.B. OpenFoam) dem Fachmann zugänglich. Die Anwendung der zugrundeliegenden numerischen Finite Elemente Verfahren ist Bestandteil der Hochschulausbildung in ingenieurtechnischen Studiengängen und somit dem geschulten Fachmann vertraut.

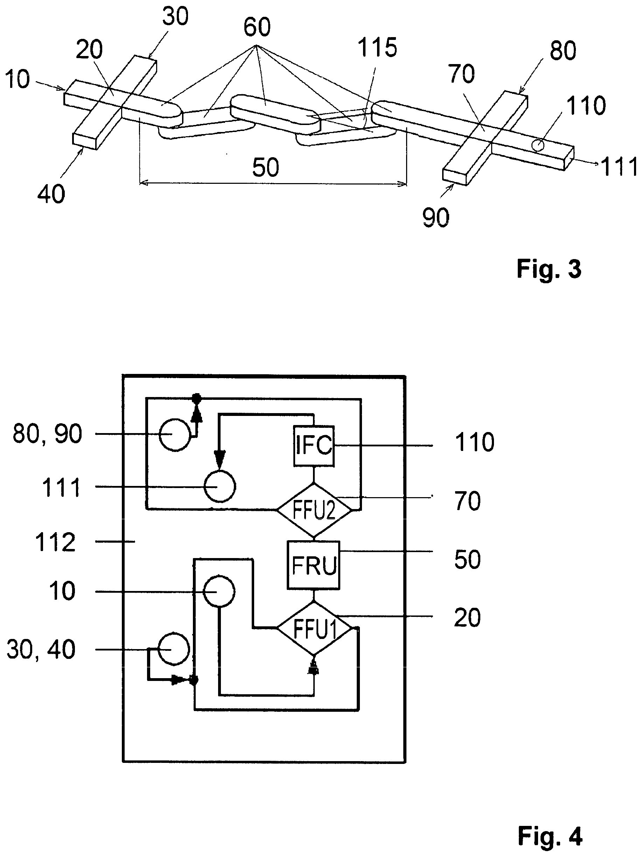

Der Flusssteuerbaustein (4) mit Fluid-Rotationseinheit (50) umfasst, wie in Fig. 3 schematisch dargestellt, folgende vier Baugruppen:

- die erste hydrodynamische Fokussierungseinheit (20)
- die erfindungsgemäße Fluid-Rotationseinheit (50)
- die zweite hydrodynamische Fokussierungseinheit (70)
- den Untersuchungskanal bzw. Durchfluss-Messzelle (110), z.B. für bildbasierte Durchfluss-Zytometrie.

Die Fluid-Rotationseinheit (50) besteht als Bestandteil des Flusssteuerbausteins (4) aus zwei oder mehreren, hintereinander angeordneten, an ihren Enden miteinander verbundenen Kanalsegmenten (60), wobei die beiden jeweils miteinander verbundenen Kanalsegmente winklig zueinander (und nicht in gerader Linie) angeordnet sind (115), so dass ein Fluidstrom beim Durchfließen der Übergänge zwischen den Kanalsegmenten (60) jeweils die Richtung ändern muss.

Die Kanalsegmente können in ein beliebiges Substrat eingebracht werden, dass für den Transport des Fluids geeignet ist. Bevorzugt ist das Material optisch-lichtdurchlässiges Glas oder optisch- lichtdurchlässiger Kunststoff, um die Durchfluss-Messzelle direkt in das Zweilagen-Chipsystem zu integrieren. Besonders vorteilhaft ist das Material Borosilikatglas.

Bei einem Zweilagen-Chipsystem, dessen Chipebene zur Veranschaulichung horizontal ausgerichtet sein soll, sind die Kanalsegmente (60) abwechselnd in das obere und das untere Substrat so eingebracht, so dass nach dem Verbinden der beiden Chiplagen die zuvor offenen Kanäle durch die Oberfläche der jeweils anderen Chiplage geschlossen werden und nur an den Enden der Kanäle eine Verbindung zum nächsten Kanalsegment besteht (siehe dazu Fig. 3).

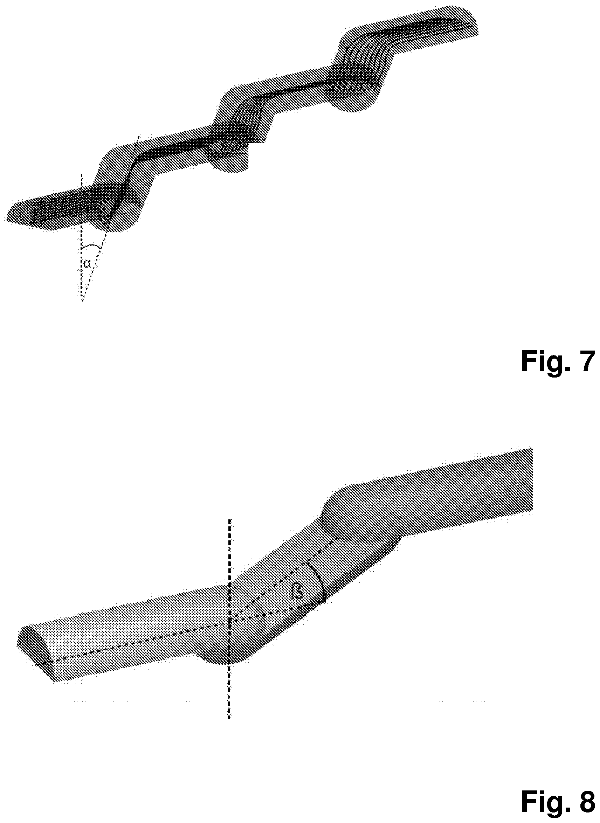

Die Querschnittsgeometrie der Kanäle und die Gestaltung der Kanal-Enden und Übergänge ergeben sich aus den Möglichkeiten der für die Kanalherstellung verwendeten Technologien. Prinzipiell sind an halbrunde Kanalquerschnitte in Verbindung mit als Kugelsegmenten ausgeführten Endstücken bzw. an diese angenäherte Geometrien (siehe Fig. 7 und 8) zu empfehlen.

Weiterhin können Kanäle mit runden bzw. durch Kreissegmente beschreibbaren bzw. an diese angenäherte Geometrien (Ellipsensegmente, Kombinationen aus Kreissegmenten und Trapezen oder Dreiecksflächen) genutzt werden. Darüber hinaus können trapezförmige oder rechteckige Kanalquerschnitte in Verbindung mit Endstücken, welche durch Rotationskörper dieser Geometrien darstellbar oder an diese approximierte aus Teilflächen zusammengesetzte Geometrien verwendet werden.

Durchfließt das Fluid einen solchen Übergang zum Beispiel von oben nach unten (siehe Fig. 7 und 8), so wird das Fluid am Ende des oberen Kanalsegmentes (220) zuerst nach unten umgelenkt (221). Am Anfang dieses sich anschließenden Kanalsegmentes (224) wird der Fluidstrom sofort erneut umgelenkt und in das untere Kanalsegment geleitet (223). Durch die Nähe der beiden Kanalsegmentenden gehen die beiden Richtungsänderungen ineinander über und können nur im Zusammenhang betrachtet werden. Das ist ein deutlicher Unterschied zum Stand der Technik, der Transfer-Kanäle in zwischengeschalteten mittleren Chiplagen verwendet, wodurch sich zwei getrennte Richtungsänderungen abgrenzen lassen.

Weil die beiden verbundenen Kanalsegmente winklig zueinander angeordnet (und nicht in gerader Linie oder parallel zueinander) sind (115), wird eine Rotation des Fluids um die Strömungsachse bewirkt. Es können mehrere Übergänge nacheinander angeordnet werden, wobei sich die Rotationen addieren. Dabei folgt eine Fluidlamelle einem möbiusbandartigen Strömungspfad. Es ist darauf zu achten, dass der Richtungssinn der Übergänge beibehalten wird, weil sich die Rotationen sonst subtrahieren bzw. gegenseitig aufheben.

Um eine gewünschte Gesamtrotation des Fluids von 90 Grad zum Beispiel bei einem halbrunden Kanalquerschnitt mit einer Kanalhöhe von 70 µm und einer Länge der Kanalsegmente (15) von 600 µm zu bewirken, kann man sechs Übergänge mit einem Knickwinkel von β = 32 Grad hintereinander so anordnen, dass eine Gesamtfluidrotation um 90 Grad erzielt wird.

In Fig. 7 und 8 sind zur Veranschaulichung der Knickwinkel der Kanäle ß und der Winkel der axialen Rotation α exemplarisch eingezeichnet. Im konkreten Fall wird die angestrebte Fluidrotation um 90 Grad nach Durchlaufen von sechs mit zueinander in einem Winkel von 32 Grad zueinander geknickten Kanalübergängen erreicht. Dabei ist der Rotationswinkel α der Fluidlamelle in den einzelnen Übergängen nicht eingesetzt wird, wenn die Fluide mit geringen Transportgeschwindigkeiten und Reynolds Zahlen transportiert werden sollen.

Es wird eine spezielle Fluid-Rotationseinheit bereit gestellt, in der winklig zueinander ausgerichtete Strömungskanalsegmente in Form von Mikrokanäle in einem Zweilangen-Chipsystem hintereinander angeordnet sind, wobei der Fluidstrom beim Durchfließen der Übergänge zwischen den Kanälen um die Flussachse um jeweils einen Winkel α gedreht wird, der von der Kanalgeometrie und vom Winkel β zwischen den Kanalsegmenten abhängt, wobei dieser Winkel β die Abweichung von einer geradlinigen bzw. parallelen Anordnung der verbunden Kanalsegmente angibt.

Für die Vielfalt der möglichen Kanalgeometrien, insbesondere der Form der Kanalquerschnitte, und der möglichen Ausformungen der Übergänge zwischen den Kanalsegmenten ist eine Berechnung des resultierenden Winkels der Fluidrotation mit einem CFD-Verfahren (computational fluid dynamics) möglich. Exemplarisch wird dies anhand eines halbrunden Kanalquerschnittes, eines halbkugelförmigen Kanalsegmentendes und eines deckungsgleichen Übergangs zwischen den Kanalsegmenten beschrieben.

Softwaresysteme für die Durchführung dieser Modellierungen sind sowohl als Bestandteil kommerzieller CAD Systeme (z.B. SolidWorks) als auch als separate Systeme von kommerziellen Anbietern (z.B. Ansys, Fluent, COMSOL) oder als Open Source Toolkits (z.B. OpenFoam) dem Fachmann zugänglich. Die Anwendung der zugrundeliegenden numerischen Finite Elemente Verfahren ist Bestandteil der Hochschulausbildung in ingenieurtechnischen Studiengängen und somit dem geschulten Fachmann vertraut.

Der Flusssteuerbaustein (4) mit Fluid-Rotationseinheit (50) umfasst, wie in Fig. 3 schematisch dargestellt, folgende vier Baugruppen:

- die erste hydrodynamische Fokussierungseinheit (20)
- die erfindungsgemäße Fluid-Rotationseinheit (50)
- die zweite hydrodynamische Fokussierungseinheit (70)
- den Untersuchungskanal bzw. Durchfluss-Messzelle (110), z.B. für bildbasierte Durchfluss-Zytometrie.

In der zweiten hydrodynamischen Fokussierungseinheit (70) wird die Zufuhr der Hilfsflüssigkeiten (80, 90) mit einem solchen Druck ausgeführt, die parallel zur Chipebene ausgerichtete Fluidlamelle ein wenig zusammengedrückt wird, um eine homogene Fluidlamelle (117) zu gewinnen, die nicht durch die Kanalwände beeinflusst wird. Damit ist die dreidimensionale hydrodynamische Fokussierung abgeschlossen. Die auf diese Weise geformte Fluidlamelle (117) kann anschließend im Untersuchungskanal bzw. in der Durchfluss-Messzelle (110) einem bildgebenden Verfahren, zum Beispiel einer bildbasierten Durchfluss-Zytometrie im Holographiemodul (1), zugeführt werden oder das Fluid am Probenausgang (111) abgeführt und in die jeweilig folgende Modul Spektroskopie-Modul (2) und Biomarker-Modul (3) eingeleitet werden.

Der Vorteil der Fluidrotation bei einem Fluid-Management mit niedrigen Flussraten, dass eine vollständige dreidimensionale hydrodynamische Fokussierung in einem einzigen Zweilangen-Chipsystem des Flusssteuerbausteins (4) realisiert werden kann.

Ein weiterer Vorteil der Fluidrotation bei einem Fluid-Management mit niedrigen Flussraten besteht darin, dass die Fluid-Rotation im Flusssteuerbaustein (4) bei geringen Transportgeschwindigkeiten in einem streng laminaren, von viskosen Kräften dominierten und durch geringe Reynolds-Zahlen gekennzeichneten Transportregime durchgeführt werden kann. Daher ist das System für geringen Flussraten und Transportgeschwindigkeiten von wenigen Millimetern pro Sekunde anwendbar. Die dadurch reduzierte Bewegungsunschärfe ermöglicht, im Gegensatz zu etablierten FACS Systemen mit Transportgeschwindigkeiten im Bereich von 1 m/s, vergleichsweise lange Expositionszeiten von bis zu 20 ms ohne erkennbare Bewegungsunschärfe.

Damit bietet der Flusssteuerbaustein (4) optimale Bedingungen für die fluoreszenz-Imaging-Durchflusszytometrie im Holographiemodul (1) oder Biomarker-Modul (3) und die bildbasierte Erfassung intensitätsschwacher optischer Signale unter Vermeidung von Bewegungsunschärfe bei den Untersuchungen im Holographiemodul (1), Spektroskopie-Modul (2) und Biomarker-Modul (3).

Vorteilhaft bei der Fluidrotation in dem Flusssteuerbaustein (4) ist auch die Kompatibilität mit geringen Reynolds Zahlen. Eine Vielzahl alternativer Verfahren für die hydrodynamische Fokussierung nutzt Trägheitseffekte der Fluide an im Kanal integrierten geometrischen Strukturen. Zu nennen sind hier die Jet-Bildung an Düsen oder die Nutzung von Dean-Flow Effekten in gekrümmten Kanälen. Diese Effekte treten bei Reynolds Zahlen im Bereich zwischen 50 und 500 auf und die Qualität der dabei erzielten Effekte zeigt eine ausgeprägte Abhängigkeit von der Transportgeschwindigkeit. Für hochviskose Fluide sind mitunter die erforderlichen Reynolds-Zahlen in Mikrokanälen aufgrund der hohen fluidischen Widerstände nur mit Hochdruck-Pumpsystemen darstellbar.

Im Gegensatz dazu ist Fluidrotation in dem Flusssteuerbaustein (4) mit dem Rotationswinel α über den gesamten, von viskosen Kräften bestimmten Flussratenbereich mit Re < 10 unabhängig von der Transportgeschwindigkeit.

Häufig ist eine Anpassung der Dichte der Prozessfluide an die Dichte der zu untersuchenden biologischen Partikel erforderlich. Für biologische Partikel mit einer Dichte von ca 1.25 g/ccm kann dies z.B. durch die Verwendung einer 50 prozentigen Lösung von Rohrzucker erreicht werden. Für die Dichteanpassung von Zellen mit Dichten im Bereich zwischen 1.005 und 1.2 g/ccm werden häufig Polysacharide, z.B. Ficoll-400, zugesetzt.

All diese Zusätze bewirken eine hochsignifikante Zunahme der Viskosität um einen Faktor von bis zu 20 (30%Ficoll). Selbst unter diesen Bedingungen bleibt die korrekte Funktion des Flusssteuerbausteins (4) hinsichtlich der erzielten Fluidrotation unverändert erhalten.

Bei der Anwendung der Fluidrotation im Flusssteuerbaustein (4) kommen Mikrokanäle mit einem Durchmesser im Bereich von 2 μm bis zu 0.75 mm zur Anwendung. Diese können mit Flussraten zwischen 1pl/s und 4μl/s im Bereich der Fluid-Rotations-Einheit (50) betrieben werden. Die maximale Flussrate für Kanäle mit einem Duchmesser von 0.75 mm für Wasser mit einer dynamischen Viskosität von 0.001 Pas innerhalb der Fluid-Rotations-Einheit (50) liegt bei 4μl/s bei einer Reynolds-Zahl von 10. In Ausnahmefällen können die Systeme mit Reynolds-Zahlen bis 50 mit geringfügigen Abstrichen in der Funktion betrieben werden. Die obere Grenze für die anzuwenden Flussraten kann dann mit 20μl/s angegeben werden. Die konkrete Passfähigkeit der verwendeten Prozessparameter im Kontext mit der Dichte und Viskosität der Trägerfluide können anhand der Reynolds-Zahl nachgeprüft werden. Dabei empfiehlt es sich, den jeweiligen hydraulischen Durchmesser der Kanäle als charakteristische Dimension D zu verwenden.

$$Re = rho * U\_MEAN * D\_H / mu$$

mit rho: Dichte, U_MEAN: mittlere Transportgeschwindigkeit, D_H: hydraulischer Durchmesser und mu: dynamische Viskosität.

Die minimal mögliche Flussrate wird lediglich durch die technischen Möglicheiten der verwendeten Pumpsysteme definiert und ist im Bereich von einem Pikoliter pro Sekunde zu verorten.

Eine weitere Möglichkeit für die effiziente Durchmischung im Flusssteuermodul (4) bildet der an sich bekannte Fluideintrag durch eine Düse in eine Kavität. Diese Anordnung erzeugt zirkuläre Strömungsmuster in der Kavität welche zu einer effizienten Durchmischung führen und zugleich der Sedimentation von im Fluid enthaltenen Partikeln und Zellen entgegenwirkt.

Die zentrale Steuer- und Computereinheit (5) verfügt über eine integrierte Steuer-Software, vermittels derer sämtliche Abläufe gesteuert und geregelt werden.

Die Holographie-Probenvorbereitungs-Kartusche (11) umfasst mikrostrukturierte fluidische Lysekanälen oder Dielektrophoresekanäle mit Mikroelektroden, die mit dem Flusssteuerbausteins (4) mikrofluidisch verbunden sind.

Beispielhafte Parameter zum Betreiben des Flusssteuerbaustein (4) sind:

- Bereitstellung von Flussraten im Bereich von 0.1 - 10nl/s während der Messung,
- Bereitstellung von Flussraten bis zu 10 μl/s für Reinigungs- und Serviceoperationen
- Bereitstellen von Flussraten und der Größenordnung 1 μl/s für den Fluidtausch in den Verbindungskapillaren.
- Beaufschlagen der Auslässe mit definiertem Gegendruck für das Fangen der Zellen an den Porenarrays für die Raman-Messung.

Der Betrieb der drei Module [Holographie-Modul (1), Raman-Spektroskopie-Modul (2) und Biomarker-Modul (3)] wird vermittels der zentralen Steuer- und Computereinheit (5) zeitgleich unmittelbar nach dem Laden der Probe in die Blutprobenzuführung (73) gestartet, so dass ein paralleler Betrieb der drei Probenmesseinheiten gegeben ist, um den Zeitaufwand für die diagnostische Testung gering zu halten.

Die Holographie-Probenmess-Einheit (12) ist eine Anordnung für ein linsenloses Inline-Auflicht-Mikroskop mit einer kohärenten Beleuchtungsquelle und einem Detektorarray, wie sie bspw. aus der DE 10 2012 016 318 A1 bekannt ist.

Die Raman-Spektroskopie-Probenvorbereitungs-Kartusche (21) umfasst mikrostrukturierte fluidische Lysekanälen oder Dielektrophoresekanäle mit Mikroelektroden, die mit dem Flusssteuerbaustein (4) mikrofluidisch verbunden sind.

Die Integration der erforderlichen Elektrodenstrukturen in die jeweilige Kartusche sowie die elektronische Ansteuerung des Systems erfolgt, in dem die Elektroden auf dem Trägersubstrat der Kartusche mit Dünnschichtverfahren und Fotolithografie / Elektronenstrahllithografie erzeugt werden.

Die Raman-Spektroskopie-Probenmess-Einheit (22) ist bspw. ein portables Raman-Spektroskopie-System für den mobilen Einsatz ist, wie es aus der DE 10 2004 034 354 B3 bekannt ist.

Für die Plamaseparation aus Vollblut wird eine Lab-in-a-Vial Plattform als Probenvorbereitungs-Kartusche genutzt. Diese Kartusche beinhaltet ein verschließbares, zylinderförmiges Gefäß mit einem Durchmesser im Bereich zwischen 5 und 25 mm mit einer konisch oder rund zulaufenden unteren Spitze. Die Seitenwände des Gefäßes sind mit Fangstrukturen für Blutzellen ausgestattet.

Für die Separation wird das zylinderförmige Gefäß um seine Achse rotiert. Die erforderliche Winkelgeschwindigkeit ergibt sich aus den für die Blutzellseparation in der Fachliteratur genannten Zentrifugalbeschleunigungen und dem Durchmesser des Gefäßes. Dabei werden die Blutzellen durch die Zentrifugalkräfte in die die Seitenwände ausgekleideten Fangstrukturen eingetragen.

Das zellfreie Plasma überschichtet als Fluid-Film die Fangstrukturen.

Nach Beendigung der Rotation sinkt dieser Film unter dem Einfluss der Schwerkraft nach unten und sammelt sich in der Spitze des zylinderfürmigen Gefäßes, von wo er entweder manuell durch pipettieren oder automatisch mit einem Autosampler entnommen wird.

Während bei konventioneller Zentrifugation das Plasma als Überstand von den im unteren Teil des Gefäßes gesammelten Zellen abpipettiert werden muss, wird bei dem hier beschriebenen Verfahren ein reine Plasmaprobe in der Spitze des Gefäßes gesammelt, welche vollständig und vollautomatisch entnommen, bspw. mit der Nadel des Autosamplers werden kann. Damit bietet dieser Ansatz optimale Voraussetzungen für die automatisierte Plamaseparation.

Aufgrund der kurzen Sedimentationswege (nur wenige Millimeter - im Vergleich zu mehreren Zentimetern in konventionellen Vacutainern) verringert sich die erforderliche Prozesszeit auf 4 Minuten (einschließlich Beladen des Gefäßes und Entnahme des Plasmas).

Die Fangstrukturen für die Blutzellseparation sind als dreidimensionale Oberflächenstrukturen mit Vertiefungen ausgebildet, in welche die Blutzellen bei der Zentrifugation eingetragen werden und welche ein Abfließen der Blutzellen unter dem Einfluss der Schwerkraft verhindern.

Im einfachsten Fall können hierfür Polyester Gaze-Stücke mit einer Netzweite im Bereich zwischen 30 und 200 μm und einer Dicke von 200 μm auf die Seitenwände des Gefäßes aufgelegt werden. Während der Zentrifugation pressen sie sich selbsttätig an die Wandung an und bilden dadurch die angestrebten Fangstrukturen aus.

Alternativ können in die Seitenwände Vertiefungen mit einer Strukturbreiten zwischen 30 und 200 μm und Tiefen von bis zu 200 μm eingebracht werden.

Eine weitere Möglichkeit bietet die Integration von Säulenstrukturen mit einem Zwischenraum zwischen 30 und 300 μm und einer Höhe von 100-500 μm.

Für die Plasmaseparation werden handelsübleiche 2 ml Einweg-Reaktionsgefäße mit Rundboden aus Polypropylen eingesetzt. Als Beispiel einer Fangstruktur dient eine Gaze.

Die Biomarker-Probenvorbereitungs-Kartusche (31) umfasst mikrostrukturierte fluidische Dielektrophoresekanäle mit Mikroelektroden oder strukturierte Mikrokanäle mit mechanischen Filtern oder Querschnittsänderungen, die mit dem Flusssteuerbaustein (4) mikrofluidisch verbunden sind.

Sämtliche Kartuschen in den Modulen (1, 2 und 3) können sowohl als Einweg- als auch als Mehrweg-Kartuschen ausgeführt sein, wobei die Einweg-Kartuschen aus Plastik bestehen (was kostengünstig ist) und Mehrweg-Kartuschen mit optischen Funktionen aus Glas, insbesondere Quarzglas, gefertigt und reinigbar sind, so dass diese teuren Kartuschen nach jedem Probendurchlauf durch zwischengeschaltete Reinigungsschritte regeneriert werden.

Die Biomarker-Probenmesseinheit (32) ist eine Photosensor-Detektor-array-Anordnung mit kohärenter Beleuchtungsquelle, wie sie bspw. für den Nachweis von diagnostischen und prognostischen Markern in der Biomedizin Verwendung findet.

Dabei handelt es sich um eine chipbasierte Biomarker-Detektion auf Grundlage eines optisch auslesbaren oberflächengebundenen Immuno-Fluoreszenz-Assays. Auch andere, bereits an sich bekannte Alternativen der Biomarker-Detektion können zu Einsatz kommen.

Die zentrale Steuer- und Computereinheit (5) verfügt über eine integrierte Software-Steuerung für die Regelung sämtlicher Abläufe des Flusssteuerbausteins (4) und sämtlicher Module (1, 2 und 3) und über eine spezielle Software zur Datenaufbereitung- und Auswertung der von den drei Modulen (1, 2 und 3) aufgenommenen Messdaten, wie bspw. für die Auswertung der Raman-Daten.

Diese Auswertung der Raman-Daten mit dem Ziel der Extraktion klinisch relevanter Informationen aus den Raman-Spektren erfolgt an Hand multivarianter Datenanalysetechniken, wie z.B. die Hauptkomponentenanalyse, neuronale "Netzwerke", lineare Diskriminanzanalyse oder die Clusteranalyse).

Gleichzeitig ermöglicht der Zugriff der zentralen Steuer- und Computereinheit (5) auf die Datenbank (6) den Datenabgleich der aufgenommenen und aufbereiteten Daten der Module (1, 2 und 3) mit den in der Datenbank (6) gespeicherten Referenzdaten und die komplexe Datenauswertung, die in einen angegebenen Score-Wert mündet. Dabei kommen an sich bekannte Verfahren zum Einsatz.

Zum Betreiben der Anordnung wird wie folgt vorgegangen:

Über die Blutprobenzuführung (73) wird die Blutprobe direkt aus der Kanüle, mit der sie dem Patienten abgenommen wurde, händisch in das mikrofluidische System des Flusssteuerbausteins (4) eingespritzt.

Alternativ dazu ist es aber auch möglich, dass die Zufuhr von Blutproben automatisch, bspw. vermittels eines Pipettier-Roboters erfolgt.

Dabei reicht das Blutvolumen aus der kleinsten derzeit kommerziell verfügbaren Kanüle von 2.7 ml vollkommen aus, wobei keine weitere Vorbehandlung nach Blutentnahme vom Patienten notwendig ist, da die Vorbehandlung der Blutprobe direkt in dem jeweiligen Mikrofluidikelement der drei verschiedenen Probenvorbereitungskartuschen (11, 21 und 31) für die nachfolgende Analytik in den nachfolgenden Probenmess-Einheiten (12, 22 und 32) erfolgt.

Die Blutprobe wird dabei vermittels des Flusssteuerbausteins (4) auf die Probevorbereitungs-Kartuschen (11, 21 und 31) wie folgt verteilt:

Holographie-Modul (1)

Die holographische Erfassung der Blutbestandteile erfolgt zum einen an Hand von Vollblut und zum anderen an Hand von angereicherten Leukozyten.

Für die holographische Erfassung der Blutbestandteile wird die Probe zunächst verdünnt (ca. um einen Faktor 1:500). Dies geschieht im Flusssteuerbaustein (4) durch Zumischen von Puffer aus der Pufferzuführung (72) und anschließende mikrofluidische Übergabe des verdünnten Vollbluts in die Holographie-Probenvorbreitungs-Kartusche (11).

Insgesamt werden maximal 4 $\mu$l Vollblut verwendet, die auf maximal 2 ml verdünnt und wie folgt vorbereitet sowie vermessen werden:

Raman-Spektroskopie-Modul (2)

Für eine Raman-spektroskopische Analyse der weißen Blutkörperchen (Leukozyten) erfolgt in der Raman-Spektroskopie-Probenvorbereitungs-Kartusche (21) eine Abtrennung der roten Blutkörperchen (Erythrozyten) aus dem Vollblut. Vorzugsweise erfolgt dies durch Lyse der Erythrozyten, bspw. mit $NH_4Cl$, kann alternativ dazu jedoch auch über dielektrophoretische Ablenkung erfolgen.

Dieses Leukozyten-angereichertes Blut (ca. 4 $\mu$l) wird dann in die Raman-Spektroskopie-Probenmesseinheit (22) übergeben.

Biomarker-Modul (3)

Für die Analyse der Biomarker im separierten Plasma erfolgt eine Abtrennung der zellulären Bestandteile des Blutes in der Biomarker-Probenvorbereitungs-Kartusche (31). Hierfür kommen bspw. Filtrationstechniken oder alternativ dazu Ablenktechniken mit Hilfe von elektrischen Feldern (Dielektrophorese) oder Mikrozentrifugation zum Einsatz.

In diesem Schritt werden ca. 1 ml der Gesamtblutprobe verwendet, wobei in die nachfolgende Biomarker-Probenmess-Einheit (32) ca. 500 $\mu$l Plasma übergeben werden.

In der Holographie-Proben-Messeinheit (12) werden die zellulären Bestandteile, mit einem besonderen Fokus auf Erythrozyen und Leukozyten in Zahl und Form erfasst. Dies geschieht mit einem linsenlosen Aufbau in einer einkanaligen Mikrofluidik. Dabei muss die Bildaufnahmefrequenz an die Fließgeschwindigkeit angepasst sein (bzw. umgekehrt

An die Bildaufnahme schließt sich eine Bildauswertung an, die es auch ermöglicht, verschiedene Leukozytensubtypen anhand der Kernmorphologie zu unterscheiden. Um hierbei optimale Ergebnisse zu erzielen, ist es auch möglich, die Vollblutprobe vor der Analyse der Leukozytensubtypenzahl einem weiteren Vorbehandlungsschritt zu unterziehen, in dem zunächst die zahlenmäßig weit überlegenen Erythrozyten (ca. 1000 Erythrozyten pro Leukozyt) durch Lyse oder Ablenktechniken mit Hilfe von elektrischen Feldern (Dielektrophorese) oder Mikrozentrifugation aus der Probe entfernt werden. Um einen besseren Kontrast der Subtypen zu erreichen, ist außerdem die Anfärbung des Zellkerns (z. B. mit Kimura-Farblösung) möglich.

In der Raman-Spektroskopie-Probenmess-Einheit (22) werden die Leukozyten für eine effektive spektroskopische Charakterisierung zunächst auf einem regelmäßigen Messgitter angeordnet.

Dies erfolgt bspw. durch eine integrierte Mikrofluidiklochchip-Struktur, bei der die Flüssigkeit durch leichten Unterdruck in der Chip-Struktur durch Löcher von einer Größe von ca. 4 $\mu$m fließt. Die großen Leukozyten lagern sich bei nur leichtem Unterdruck genau auf diesen Löchern an und stehen damit an wohl definierten Plätzen für die weitere spektroskopische Charakterisierung zur Verfügung. Blutplättchen werden durch die Löcher nicht zurückgehalten und verbleiben daher nicht auf der integrierten Mikrofluidiklochchip-Struktur.

Die Anregung der Raman-Spektren erfolgt mit kommerziell erhältlichen Lasern, bspw. 785 nm. Wird für die Herstellung der Mikrolochchipmikrofluidik Borofloat-Glas verwendet, so muss für die Anregung der Raman-Spektren ein Laser im grünen Bereich (bspw. 532 nm) verwendet werden, da sonst der Untergrund des Glases die Raman-Spektren der Zellen überdeckt.

Die Aufnahme der Spektren erfolgt genau über den Löchern in einem Durchmesser von ca. 1 bis 5 $\mu$m, um einen spektralen Beitrag der Lochchipmembran zu vermeiden. Dabei ist die Aufnahme eines Spektrums mit aufgeweitetem Laserstrahl oder die Aufnahme mehrerer Einzelspektren im entsprechenden Bereich möglich. Großer Wert wird dabei auf eine schnelle und parallelisierte Charakterisierung mehrerer Zellen auf dem Chip gelegt, da dadurch die Analysenzeit verkürzt werden kann. Insgesamt wird eine Analyse von mind. 500 Zellen durchgeführt.

Neben den Zellen wird außerdem stets ein Spektrum von der Lochmembran mit aufgenommen. Dies dient als interne Kontrolle für die automatisierte Auswertung. Für die Aufnahme eines Einzelspektrums wird ca. 1 s benötigt. Die Spektren werden im Fingerprintbereich (ca. 600 - 1860 cm$^{-1}$) ausgewertet. Bei Bedarf kann auch der CH-Bereich (2750 - 3100 cm$^{-1}$) noch hinzugezogen werden.

Die automatisierte Auswertung umfasst eine Spektrenvorbehandlung (mit Untergrundkorrektur und Normierung) sowie eine Zuordnung des Spektrums zum Leukozytensubtyp und "Aktivierungszustand".

Bei der Raman-Analyse stehen besonders die häufigen Leukozyten, wie neutrophile Granulozyten und Lymphozyten im Vordergrund. Mögliche "Aktivierungszustände", die mit dem Modul erfasst werden können, sind: a) ruhend, d. h. der Patient hat keine Infektion und keine Entzündung, b) aktiviert durch sterile Entzündung (wie sie z. B. nach einer Operation oder Herzinfarkt auftreten kann), c) aktiviert durch eine Infektion. Für den letzten Zustand ist eine weitere Unterscheidung sinnvoll, die z. B. Einblicke zum Erreger (Pilz, Bakterium, Virus) und zur Schwere der Immunantwort bietet (angemessen vs. überschwänglich, was zum Organversagen führt).

Für den Leukozytensubtyp und den Leukozyten-"Aktivierungszustand" wird ein erstelltes Klassifikationsmodel verwendet, das spezifische, spektrale Charakteristika und Änderungen nutzt, um die Immunantwort besser zu charakterisieren. Zur Erkennung des Leukozytensubtyps ist auch eine spezifische Fluoreszenzfärbung mit Oberflächenmarkern auf der integrierten Mikrofluidiklochchip-Struktur nach der Raman-Messung grundsätzlich noch möglich. Für das Auslesen muss dann das Ramanmodul noch mit einer entsprechenden Anregungslampe und einer entsprechenden Kamera ausgestattet sein.

In der Biomarker-Probenmesseinheit (32) erfolgt eine Fluoreszenzmessung zur Bestimmung verschiedener Biomarker-Konzentrationen im Plasma durch die gleichzeitige Analyse von mind. 3 fluoreszierenden Biomarkern in einer Mikrofluidik. Die Auswahl der Biomarker umfasst dabei sowohl diagnostische Marker (z.B. CRP, IL-6, PCT) als auch prognostische Marker (z.B. suPar).

Zum Betreiben der Anordnung ist zudem die zentrale Steuer- und Computersoftware (5) mit dem Zugriff auf eine Datenbank (6) von Bedeutung.

Zum einen werden durch sie der Datenfluss (81) zur Steuerung der Ventile (41), der Datenfluss (82) zur Übergabe der Messwerte aus den Modulen (1, 2, und 3) an die Steuerung und der Datenfluss (83) zur Steuerung der Messvorgänge in den Modulen (1, 2 und 3) verarbeitet und zum anderen dient sie dem internen Datenabgleich mit der Datenbank (6) und der Ausgabe (100) der Ergebnisse.

Die Datenbank (6) dient dabei der externen Auswertung und der Rückführung der Ergebnisse (101), bspw. Kontrolle durch den Arzt, und der Eingabe (102) von Daten aus externen Quellen (Spezifische Patientendaten).

Die Steuer- und Computersoftware (5), die sowohl die einzelnen Komponenten der Anordnung miteinander verbindet, um eine einfache Steuerung von einer Benutzerplattform zu ermöglichen, aber auch eine integrierte multivariate Datenanalyse durchführt, so dass die Einzelergebnisse jeder Analyse optimal in das Gesamtergebnis beitragen, stellt eine Benutzeroberfläche zur Verfügung, die von einem Arzt oder von einer Krankenschwester einfach bedient werden kann.

Die Patienten-ID der Blutprobe wird über die Eingabe (102) von Daten aus externen Quellen eingelesen, ebenso wie die klinischen Daten des Patienten aus dem Krankenhaussystem, die für die statistische Auswertung notwendig sind. Das Einlesen und die Identifikation der einzelnen Patientenblutproben kann dabei über Barcodescanner erfolgen. Auf der Benutzeroberfläche wird ein erfolgreicher Abschluss der durchlaufenen Analysen der einzelnen Module (1, 2 und 3) dokumentiert, bzw. es werden eventuell auftretende Fehler angezeigt.

Als Ergebnis werden sowohl die Ergebnisse der einzelnen Module (1, 2 und 3), d.h. Biomarker-Konzentrationen, die Zellzahlen und ein Raman-Score, als auch die Korrelation dieser einzelnen Ergebnisse angezeigt, in dem diese durch die Steuer- und Computersoftware (5) zusammen mit den eingelesenen klinischen Daten intern evaluiert und für den Arzt als "Sepsis-Score" angezeigt werden.

Dieser "Sepsis-Score"- Wert gibt Auskunft, mit welcher Wahrscheinlichkeit bei dem Patienten eine Infektion vorliegt und mit welcher Wahrscheinlichkeit der Patient eine kritische Entwicklung (z. B. Organversagen, septischer Schock) durchmachen wird, d.h. besondere medizinische Aufmerksamkeit benötigt.

Das zugrunde liegende Klassifikationsmodell, das aus der Vielzahl der Parameter diese Aussagen ermöglicht, wird über die externe Auswertung und Rückführung (101) der Ergebnisse in die Datenbank mit wohl definierten Patienten, deren Krankheitsverlauf bekannt ist, trainiert und evaluiert.

Ein Vorteil des parallelen Betriebs der an den Flusssteuerbaustein (4) angekoppelten drei Module [Holographie-Modul (1), Raman-Spektroskopie-Modul (2) und Biomarker-Modul (3)] gemäß der vorliegenden technischen Lösung besteht darin, dass gegenüber den bisher bekannten Einzellösungen, die als Ergebnis lediglich die Biomarker-Konzentrationen, die Zellzahlen oder ein Raman-Score liefern, in einem viel kürzeren Zeitraum gleichzeitig sämtliche einzelnen Ergebnisse der drei Module vorliegen, wobei die Korrelation dieser einzelnen Ergebnisse angezeigt wird, in dem diese durch die Steuer- und Computersoftware (5) zusammen mit den eingelesenen klinischen Daten intern evaluiert und für den Arzt als "Sepsis-Score" ausgewertet und angezeigt werden.

Ein weiterer Vorteil besteht darin, dass durch den parallelen Betrieb der drei Module (1, 2 und 3), der durch die spezielle Funktionsweise des Flusssteuerbausteines (4) und durch die zentrale Steuer- und Computereinheit (5) ermöglicht ist, ein Synergie-Effekt bewirkt, so dass für die gesamte Analyse insgesamt [d.h. vom Einspritzen des Blutes mit einer geringen Blutmenge von nur 1 bis 2 ml bis zur Angabe des s.g. "Sepsis-Score" als aussagekräftiges Untersuchungsendergebnis auf der Benutzeroberfläche der Steuer- und Computersoftware (5)] maximal eine Stunde vergeht.

Von Vorteil dabei ist, dass [für den Fall, dass es durch die Steuer- und Computersoftware (5) zu keiner Fehlermeldung kommt], während dieser kurzen Mess-Zeit von maximal einer Stunde kein externer Zugriff an der Anordnung notwendig ist.

Von Vorteil ist dabei auch, dass für den Fall, dass von den Modulen (1, 2 und 3) gelieferte Biomarker-Konzentrationen, Zellzahlen und Raman-Score nicht eindeutige oder widersprüchliche Zwischenergebnisse auf dem "Weg" zum Endergebnis in Form des "Sepsis-Score" liefern, durch die Steuer- und Computersoftware (5) eine Rückkopplung zum Flusssteuerbaustein (4) in der Art erfolgt, dass ein erneuter automatisierter Durchlauf der betreffenden Probe durch die Module (1, 2 und 3) bewirkt wird.

Die Miniaturisierung von Holographie-Modul (1), Raman-Spektroskopie-Modul (2) sowie Biomarker-Modul (3), die kompakte Biomarker-Probenmesseinheit (32) und die portable Raman-Spektroskopie-Probenmess-Einheit (22) ermöglichen zudem eine Analyse direkt in der räumlichen Nähe des Patienten (meist Intensivpatient für die primäre Anwendung bzw. Notaufnahmesituation), was einen weiteren Vorteil der vorliegenden Technischen Lösung darstellt.

Alle in der Beschreibung, den Ausführungsbeispielen und den nachfolgenden Ansprüchen dargestellten Merkmale können sowohl einzeln als auch in beliebiger Kombination miteinander erfindungswesentlich sein.

Bezugszeichenliste

1 - Holographie-Modul

11 - Holographie-Probenvorbereitungs-Kartusche

12 - Holographie-Probenmess-Einheit

2 - Raman-Spektroskopie-Modul

21 - Raman-Spektroskopie- Probenvorbereitungs-Kartusche

22 - Raman-Spektroskopie- Probenmess-Einheit

3 - Biomarkermodul

31 - Biomarker- Probenvorbereitungs-Kartusche

32 - Biomarker- Probenmess-Einheit

4 - Flusssteuerbaustein

41 - ansteuerbares Ventil

5 - zentrale Steuer- und Computereinheit mit integrierter Software-Steuerung

6 - Datenbank

7 - Flüssigkeitsmaterialzuführungen

71 - Farblösungs-Zuführung

72 - Puffer-Zuführung

73 - Blutproben-Zuführung

74 - Biomarker 1-Zuführung

75 - Biomarker 2-Zuführung

76 - Biomarker 3-Zuführung

81 - Datenfluss zur Steuerung der Ventile

82 - Datenfluss zur Übergabe der Messwerte aus den Modulen an die Steuerung

83 - Datenfluss zur Steuerung der Messvorgänge in den Modulen

100 - Ausgabe der Ergebnisse

101 - externe Auswertung und Rückführung der Ergebnisse in die Datenbank

102 - Eingabe von Daten aus externen Quellen

10 - Probenzufuhr

20 - erste hydrodynamische Fokussierungseinheit

30 - Hilfsflüssigkeit (Trägerfluid) für erste Fokussierungseinheit

40 - Hilfsflüssigkeit (Trägerfluid) für erste Fokussierungseinheit

50 - Fluid-Rotationseinheit

60 - winklig zueinander angeordnete Kanalsegmente

70 - zweite hydrodynamische Fokussierungseinheit

80 - Hilfsflüssigkeit (Trägerfluid) für zweite Fokussierungseinheit

90 - Hilfsflüssigkeit (Trägerfluid) für zweite Fokussierungseinheit

110 - Untersuchungskanal, z.B. für bildbasierte Durchfluss-Zytometrie

111 - Probenausgang

112 - Substrat des Zweilagen-Chipsystems

113 - Fluidlamelle nach der ersten hydrodynamischen Fokussierungseinheit

114 - Chipebene

115 - Winkel β zwischen den Kanalsegmenten

116 - Winkel α der Rotation des Fluids um die Flussachse

117 - homogene Fluidlamelle (Fluidlamelle nach der Fluidrotation)

220 - Ende eines Kanalsegmentes

221 - Umlenkung um 90 Grad am Ende des Kanalsegmentes

222 - Übergang zwischen den Chiplagen

223 - Umlenkung um 90 Grad am Anfang des folgenden Kanalsegmentes

224 - Anfang des folgenden Kanalsegmentes

225 - Ebene zwischen den beiden Lagen des Zweilagen-Chipsystems

**Patentansprüche**

1. Anordnung für die individualisierte *in-vitro-* Patientenblutanalyse umfassend ein Holographie-Modul (1), ein Raman-Spektroskopie-Modul (2), ein Biomarker-Modul (3) und einen integrierten Flusssteuerbaustein (4), welche daten- und informationsleitend mit einer zentralen Steuer- und Computereinheit (5) in Verbindung stehen, die informationsleitend mit einer Datenbank (6) verbunden ist, wobei

   • das Holographie-Modul (1) aus einer Holographie-Probenvorbereitungs-Kartusche (11) und einer Holographie-Probenmess-Einheit (12) besteht, die mikrofluidisch miteinander verbunden sind,
   • das Raman-Spektroskopie-Modul (2) aus einer Raman-Spektroskopie-Probenvorbereitungs-Kartusche (21) und einer Raman-Spektroskopie-Probenmess-Einheit (22) besteht, die mikrofluidisch miteinander verbunden sind,
   • das Biomarker-Modul (3) aus einer Biomarker-Probenvorbereitungs-Kartusche (31) und einer Biomarker-Probenmess-Einheit (32) besteht, die mikrofluidisch miteinander verbunden sind, und
   die Module (1, 2 und 3) über den Flusssteuerbaustein (4) mit einer gemeinsamen Blutprobenzuführung (73) und weiteren Flüssigkeitsmaterialzuführungen (7) fluidisch verbunden sind,

   wobei

• die Holographie-Probenvorbereitungs-Kartusche (11) aus mikrostrukturierten mikrofluidischen Lysekanälen oder Dielektrophoresekanälen mit Mikroelektroden besteht, die mit dem Flusssteuerbaustein (4) mikrofluidisch verbunden sind und die Holographie-Probenmess-Einheit (12) eine Anordnung für ein linsenloses Inline-Auflicht-Mikroskop mit einer kohärenter Beleuchtungsquelle und einem Detektorarray ist,

• die Raman-Spektroskopie-Probenvorbereitungs-Kartusche (21) aus mikrostrukturierten mikrofluidischen Lysekanälen oder Dielektrophoresekanälen mit Mikroelektroden besteht, die mit dem Flusssteuerbaustein (4) mikrofluidisch verbunden sind und die Raman-Spektroskopie-Probenmess-Einheit (22) ein portables Raman-Spektroskopie-System für den mobilen Einsatz ist, und

• die Biomarker-Probenvorbereitungs-Kartusche (31) aus mikrostrukturierten mikro-fluidischen Dielektrophoresekanälen mit Mikroelektroden oder strukturierten Mikrokanälen mit mechanischen Filtern oder Querschnittsänderungen besteht, die mit dem Flusssteuerbaustein (4) mikrofluidisch verbunden sind und die Biomarker-Probenmesseinheit (32) eine Photosensor-Detektorarray- Anordnung mit kohärenter Beleuchtungsquelle ist, wobei

• die Module (1, 2 und 3), die Blutprobenzuführung (73) und die Flüssigkeitsmaterialzuführungen (7) über den Flusssteuerbaustein (4) fluidisch integriert kombiniert sind, so dass vermittels der zentralen Steuer- und Computereinheit (5) über den Flusssteuerbaustein (4) Datenflüsse (81, 82 und 83) zur Steuerung der Ventile, zur Übergabe der Messwerte aus den Modulen (1, 2 und 3) an die zentrale Steuer- und Computereinheit (5) und zur Steuerung der Messvorgänge in den Modulen (1, 2 und 3) vornehmbar sind.

2. Anordnung für die individualisierte in-vitro Patientenblutanalyse gemäß Anspruch 1, wobei der Flusssteuerbaustein (4) aus einem mikro-strukturierten Substrat mit mikrofluidischen Kanälen besteht, in denen ansteuerbare Ventile (41) angeordnet sind, so dass geordnete Flüssigkeitsleitwege in der Art generierbar sind, dass der Flüssigkeitsleitweg von der gemeinsamen Blutprobenzuführung (73) in drei Flüssigkeitsleitwege aufgespalten ist, die in die Kartuschen (11, 21 und 31) führen, wobei über die durch die Steuer- und Computereinheit (5) gesteuerten Ventile (41) die Flüssigkeitszuführungen (7) selektiv zuschaltbar sind und dass der Flusssteuerbaustein (4) eine Fluid-Rotationseinheit (50) umfasst, welche aus zwei oder mehreren, hintereinander angeordneten, an ihren Enden miteinander verbundenen Kanalsegmenten (60) besteht, wobei die beiden jeweils miteinander verbundenen Kanalsegmente winklig zueinander angeordnet sind, so dass ein Fluidstrom beim Durchfließen der Übergänge zwischen den Kanalsegmenten (60) jeweils die Richtung ändern muss.

3. Anordnung für die individualisierte in-vitro Patientenblutanalyse gemäß Anspruch 2, wobei die beiden jeweils miteinander verbundenen Kanalsegmente (60) von insgesamt sechs Kanalsegmenten (60) in einem Winkel von 32 Grad zueinander angeordnet sind, um eine Gesamtrotation des Fluids von 90 Grad zu bewirken.

4. Anordnung für die individualisierte in-vitro Patientenblutanalyse gemäß Anspruch 2, wobei die Kanalsegmente (60) als Mikrokanäle in einem Zweilagen-Chipsystem ausgeführt sind, wobei die hintereinander angeordneten Kanalsegmente (60) abwechselnd in die obere und untere Chiplage eingebracht sind, so dass nach dem Verbinden der beiden Chiplagen die zuvor offenen Mikrokanäle durch die Oberfläche der jeweils anderen Chiplage geschlossen werden und nur an den Enden der Mikrokanäle eine Verbindung zum nächsten Kanalsegment besteht.

5. Anordnung für die individualisierte in-vitro Patientenblutanalyse gemäß Anspruch 4, wobei in das Zweilagen-Chipsystem vor der Anordnung für die Fluidrotation (50) eine hydrodynamische Fokussierungseinheit (20) und nach der Anordnung für die Fluidrotation (50) eine zweite hydrodynamische Fokussierungseinheit (70) eingebracht ist, wobei sich nach der zweiten hydrodynamischen Fokussierungseinheit (70) ein Untersuchungskanal oder eine Durchfluss-Messzelle befindet.

6. Anordnung für die individualisierte in-vitro Patientenblutanalyse gemäß Anspruch 1, wobei die zentrale Steuer-und Computereinheit (5) über eine integrierte Steuer-Software verfügt.

7. Anordnung für die individualisierte in-vitro Patientenblutanalyse gemäß Anspruch 1 oder 2, wobei der Flusssteuerbaustein (4) ein Mehrlagen-Chipsystem mit integrierten Reagenzvorlagen, Förderkanälen, einem Ventilblock und einem Anschlussblock ist, welches mikrofluidische Kanäle in Form der Fluid-Rotationseinheit (50) aufweist, die für niedrige Flussraten und kleine Reynoldszahlen (Re < 10) aus zwei oder mehreren, hintereinander angeordneten, an ihren Enden miteinander verbunden Mikrokanalsegmenten besteht, wobei die beiden jeweils miteinander verbunden Kanalsegmente in einem Winkel $\alpha$ zueinander angeordnet sind, sich die beiden jeweils miteinander verbunden Kanalsegmente in zwei übereinaderliegenden Ebenen befinden, die Enden der Kanalsegmenten geschlossen sind und der Übergang zum nächsten Kanalsegmenten seitlich an den Kanalsegmentenden erfolgt, wobei die hintereinander angeordneten Kanalsegmente abwechselnd in die obere und untere Chiplage des Mehrlagen-Chipsystem eingebracht sind.

8. Verwendung einer Anordnung gemäß einem oder mehrerer der voran stehenden Ansprüche 1 bis 7 zur Bestimmung eines Sepsis-Scores.

**Claims**

1. An arrangement for the individualized *in-vitro* patient blood analysis comprising a holography module (1), a Raman spectroscopy module (2), a biomarker module (3) and an integrated flow controller (4) which are connected in a data and information transmitting manner to a central control and computer unit (5) which has an information transmitting connection to a database (6), wherein

   • the holography module (1) consists of a holography sample preparation cartridge (11) and a holography sample measurement unit (12) which are microfluidically connected to each other,
   • the Raman spectroscopy module (2) consists of a Raman spectroscopy sample preparation cartridge (21) and a Raman spectroscopy sample measurement unit (22) which are microfluidically connected to each other,
   • the biomarker module (3) consists of a biomarker sample preparation cartridge (31) and biomarker sample measurement unit (32) which are microfluidically connected to each other, and the modules (1,2 and 3) are fluidically connected to a common blood sample supply (73) and further fluid material supplies (7) via the flow controller (4), wherein
   • the holography sample preparation cartridge (11) consists of microstructured microfluidic lysis channels or dielectrophoresis channels with microelectrodes which are microfluidically connected to the flow controller (4), and the holography sample measurement unit (12) is an arrangement for a lensless inline reflected-light microscope with a coherent illumination source and a detector array,
   • the Raman spectroscopy sample preparation cartridge (21) consists of microstructured microfluidic lysis channels or dielectrophoresis channels with microelectrodes which are microfluidically connected to the flow controller (4), and the Raman spectroscopy sample measurement unit (22) is a portable Raman spectroscopy system for mobile use, and
   • the biomarker sample preparation cartridge (31) consists of microstructured microfluidic dielectrophoresis channels with microelectrodes or of microchannels which are provided with mechanical filters or cross-section changes and microfluidically connected to the flow controller (4), and the biomarker sample measurement unit (32) is a photo sensor detector array arrangement with a coherent illumination source, wherein
   • the modules (1, 2 and 3), the blood sample supply (73) and the fluid material supplies (7) are combined in a fluidically integrated manner via the flow controller (4) so that data flows (81, 82 and 83) for controlling the valves, for transferring the measured values from the modules (1, 2 and 3) to the central control and computer unit (5) and for controlling the measurement processes in the modules (1, 2 and 3) may be effected by the central control and computer unit (5) via the flow controller (4).

2. The arrangement for the individualized in-vitro patient blood analysis according to claim 1, wherein the flow controller (4) consists of a micro-structured substrate with microfluidic channels in which controllable valves (41) are provided so that orderly fluid guiding paths may be generated such that the fluid guiding path from the common blood sample supply (73) is divided into three fluid guiding paths which lead to the cartridges (11, 21 and 31), wherein the fluid supplies (7) can be selectively connected via the valves (41) which are controlled by the control and computer unit (5), and that the flow controller (4) comprises a fluid rotation unit (50) which consists of two or more channel segments (60) arranged one behind the other and connected to each other at their ends, wherein always the two interconnected channel segments are arranged at an angle to each other so that a fluid flow must always change its direction when passing the transitions between the channel segments (60).

3. The arrangement for the individualized in-vitro patient blood analysis according to claim 2, wherein always the two interconnected channel segments (60) of a total of six channel segments (60) are arranged at an angle of 32 degrees one to another to cause an overall rotation of the fluid of 90 degrees.

4. The arrangement for the individualized in-vitro patient blood analysis according to claim 2, wherein the channel segments (60) are designed as microchannels in a two-layer chip system, wherein the channel segments (60) arranged one behind the other are alternately inserted into the upper and lower chip layer so that, after the two chip layers have been connected, the previously open microchannels are closed by the surface of the respective other chip layer and a connection to the next channel segment exists only at the ends of the microchannels.

5. The arrangement for the individualized in vitro patient blood analysis according to claim 4, wherein a hydrodynamic focusing unit (20) is provided into the two-layer chip system in front of the arrangement for the fluid rotation unit (50) and a second hydrodynamic focusing unit (70) is provided behind the arrangement for the fluid rotation unit (50), wherein an examination channel or a flow measuring cell is located behind the second hydrodynamic focusing unit (70).

6. The arrangement for the individualized in-vitro patient blood analysis according to claim 1, wherein the central control and computer unit (5) has an integrated control software.

7. The arrangement for the individualized in-vitro patient blood analysis according to claim 1 or 2, wherein the flow controller (4) is a multilayer chip system which is provided with integrated reagent templates, transport channels, a valve block and a connection block and has microfluidic channels in the form of a fluid rotation unit (50) which, for low flow rates and small Reynold numbers (Re < 10), consists of two or several microchannel segments arranged one behind the other and connected to each other at their ends, wherein always the two interconnected channel segments are arranged at an angle α to each other, the two interconnected channel segments are provided at two levels one positioned on top of the other, the ends of the channel segments are closed, and the transition to the next channel segment is located laterally at the channel segment ends, wherein the channel segments arranged one behind the other are alternately inserted into the upper and lower layer of the chip system.

8. Use of an arrangement according to one or several of the previous claims 1 to 7 for determining a sepsis score.

## Revendications

1. Dispositif pour l'analyse de sang individualisée d'un patient *in vitro* contenant un module d'holographie (1), un module de spectroscopie de Raman (2), un module de biomarqueurs (3) et un composant régulateur de flux (4) intégré, qui sont en communication de données et d'information avec une unité centrale de commande et d'informatique (5) reliée par communication d'informations à une base de données (6)

   • dans lequel le module d'holographie (1) comprend une cartouche de préparation d'échantillon d'holographie (11) et une unité de mesure d'échantillon d'holographie (12) qui sont en communication microfluidique,
• dans lequel le module de spectroscopie de Raman (2) comprend une cartouche pour la préparation d'échantillon de spectroscopie de Raman (21) et une unité pour la mesure d'échantillon de spectroscopie de Raman (22) qui sont en communication microfluidique,
• dans lequel le module de biomarqueurs (3) comprend une cartouche de préparation d'échantillon de biomarqueurs (31) et une unité de mesure d'échantillon de biomarqueurs (32) qui sont en communication microfluidique, et

les modules (1, 2 et 3) sont en communication microfluidique avec une alimentation en échantillons sanguins commune (73) et d'autres alimentations en matière liquide (7) par l'intermédiaire du composant régulateur de flux (4),

   • dans lequel la cartouche de préparation d'échantillon d'holographie (11) comprend des canaux de lyse microfluidiques microstructurés ou des canaux de diélectrophorèse avec microélectrodes, qui sont en communication microfluidique avec le composant régulateur de flux (4), et l'unité de mesure d'échantillon d'holographie (12) est un dispositif pour microscope à lumière incidente en ligne sans lentille avec une source d'éclairage cohérente et un réseau de détecteurs,
   • dans lequel la cartouche pour la préparation d'échantillon de spectroscopie de Raman (21) comprend des canaux de lyse microfluidiques microstructurés ou des canaux de diélectrophorèse avec microélectrodes, qui sont en communication microfluidique avec le composant régulateur de flux (4), et l'unité pour la mesure d'échantillon de spectroscopie de Raman (22) est un système portable de spectroscopie de Raman pour un usage mobile, et
   • dans lequel la cartouche de préparation d'échantillon de biomarqueurs (31) comprend des canaux de diélectrophorèse microstructurés microfluidiques avec des microélectrodes ou de microcanaux structurés avec des filtres mécaniques ou des modifications de la section transversale, qui sont en communication microfluidique avec le composant régulateur de flux (4), et l'unité de mesure d'échantillon de biomarqueurs (32) est un réseau de photodétecteurs avec une source d'éclairage cohérente,
   • dans lequel les modules (1, 2 et 3), l'alimentation en échantillons sanguins (73) et les alimentations en matière liquide (7) sont combinés de manière intégrée par voie fluidique par l'intermédiaire du composant régulateur de flux (4) de sorte qu'au moyen de l'unité centrale de commande et d'informatique (5), des flux de données (81, 82 et 83) pour la commande des soupapes, pour le transfert des valeurs de mesure des modules (1, 2 et 3) à l'unité centrale de commande et d'informatique (5) et pour la commande des processus de mesure dans les modules (1, 2 et 3) peuvent être effectués.

2. Dispositif pour l'analyse de sang individualisée d'un patient in vitro suivant la revendication 1, dans lequel le composant régulateur de flux (4) est constitué d'un substrat microstructuré avec des canaux microfluidiques dans lesquels sont disposées des vannes (41) pouvant être commandées, de sorte que des voies d'acheminement de liquide ordonnées peuvent être générées de telle sorte que la voie d'acheminement de liquide de l'alimentation en échantillons sanguins commune (73) est divisée en trois voies d'acheminement de liquide qui conduisent dans les cartouches (11, 21 et 31), les alimentations en matière liquide (7) pouvant être connectées de manière sélective par l'intermédiaire des vannes (41) commandées par l'unité centrale de commande et d'informatique (5), et en ce que le composant régulateur de flux (4) comprend une unité de rotation de fluide (50) qui est constituée de deux ou plusieurs segments de canaux (60) disposés l'un derrière l'autre et reliés entre eux à leurs extrémités, les deux segments de canaux respectivement reliés entre eux étant disposés sous un angle l'un par rapport à l'autre, de sorte qu'un flux de fluide doit respectivement changer de direction lorsqu'il traverse les transitions entre les segments de canaux (60).

3. Dispositif pour l'analyse de sang individualisée d'un patient in vitro suivant la revendication 2, dans lequel les deux segments de canaux (60) reliés respectivement l'un à l'autre parmi un total de six segments de canaux (60) sont disposés selon un angle de 32 degrés l'un par rapport à l'autre afin d'effectuer une rotation totale du fluide de 90 degrés.

4. Dispositif pour l'analyse de sang individualisée d'un patient in vitro suivant la revendication 2, dans lequel les segments de canaux (60) sont réalisés sous la forme de microcanaux dans un système de puces à deux couches, les segments de canaux (60) disposés les uns derrière les autres étant introduits en alternance dans la couche de puces supérieure et dans la couche de puces inférieure, de sorte qu'après la liaison des deux couches de puces, les microcanaux précédemment ouverts sont fermés par la surface de l'autre couche de puces respective et qu'il existe une liaison avec le segment de canal suivant uniquement au niveau des extrémités des microcanaux.

5. Dispositif pour l'analyse de sang individualisée d'un patient in vitro suivant la revendication 4, dans lequel une unité de focalisation hydrodynamique (20) est introduite dans le système de puces à deux couches avant le dispositif pour la rotation du fluide (50) et une deuxième unité de focalisation hydrodynamique (70) est introduite après le dispositif pour la rotation du fluide (50), un canal d'examen ou une cellule de mesure de débit se trouvant après la deuxième unité de focalisation hydrodynamique (70).

6. Dispositif pour l'analyse de sang individualisée d'un patient in vitro suivant la revendication 1, dans lequel l'unité centrale de commande et d'informatique (5) dispose d'un logiciel de commande intégré.

7. Dispositif pour l'analyse de sang individualisée d'un patient in vitro suivant la revendication 1 ou 2, dans lequel le composant régulateur de flux (4) est un système de puces multicouches avec des modèles de réactifs intégrés, des canaux de transport, un bloc de vannes et un bloc de raccordement, qui présente des canaux microfluidiques sous la forme de l'unité de rotation de fluide (50) qui, pour de faibles débits et de petits nombres de Reynolds (Re < 10), est constituée de deux ou plusieurs segments de microcanaux disposés les uns derrière les autres et reliés entre eux à leurs extrémités, les deux segments de canaux respectivement reliés l'un à l'autre étant disposés selon un angle $\alpha$ l'un par rapport à l'autre, les deux segments de canaux respectivement reliés l'un à l'autre se trouvant dans deux plans superposés, les extrémités des segments de canaux étant fermées et le passage au segment de canaux suivant s'effectuant latéralement aux extrémités des segments de canaux, les segments de canaux disposés l'un derrière l'autre étant introduits en alternance dans la couche de puces supérieure et inférieure du système de puces multicouches.

8. Utilisation d'un dispositif selon une ou plusieurs des revendications 1 à 7 précédentes pour déterminer un score de sepsis.

**Fig. 1**

EP 3 347 691 B1

Ventilblock mit Kanalnetzwerk.
Kreis: Quetschventil
offen: Innenraum weiss,
geschlossen: Innenraum grau

Anordnung       Schaltbeispiel 1       Schaltbeispiel 2

Fig. 2

**Fig. 3**

**Fig. 4**

**Fig. 5**

**Fig. 6**

**Fig. 7**

**Fig. 8**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2008052221 A2
- US 2014234949 A1
- DE 102012016318 A1
- DE 102004034354 A1
- US 2007177458 A
- US 2009194705 A1
- US 2007153268 A1
- DE 102004034354 B3